# NEUE EUROPÄISCHE PATENTSCHRIFT

(11) **EP 0 698 580 B2**
(45) Veröffentlichungstag und Bekanntmachung des Hinweises auf die Entscheidung über den Einspruch: **17.11.1999**
(45) Hinweis auf die Patenterteilung: 06.11.1996
(21) Anmeldenummer: 94810481.5
(22) Anmeldetag: 22.08.1994
(51) Int. Cl.: C02F 5/10, C02F 5/12, C02F 5/14

(54) **Mittel zur Verhinderung von Ausscheidungen und von Sauerstoffkorrosion in Prozesswässern**
Composition for preventing deposit formation and oxygen corrosion in industrial process waters
Composition pour empecher la formation de depots et la corrosion par oxygène dans les eaux industrielles

(43) Veröffentlichungstag der Anmeldung: 28.02.1996
(73) Patentinhaber: FABORGA S.A., 1211 Genève 6 (CH)
(72) Erfinder: Graf, Anton, CH-1200 Genf (CH)
(74) Vertreter: Mohnhaupt, Dietrich

(56) Entgegenhaltungen:
- EP-A- 0 065 609
- EP-A- 0 134 365
- EP-A- 0 388 836
- EP-A- 0 500 266
- EP-A- 0 541 317
- EP-B- 0 184 558
- FR-B- 2 304 686
- US-A- 4 039 459
- US-A- 5 078 879
- US-A- 5 169 563

## Beschreibung

Die vorliegende Erfindung betrifft Mittel zur Verhinderung der Ausscheidung von Kesselstein, kesselsteinähnlichen Ablagerungen und anderen Abscheidungen sowie von Sauerstoffkorrosion in Prozesswässern, d.h. in Anlagen, in denen Wasser verwendet und/oder im Kreislauf geführt wird, welches zur Ausfällung neigende Stoffe, insbesondere Mineralsalze, und/oder Sauerstoff enthält, nach dem Oberbegriff des ersten unabhängigen Patentanspruchs.

Prozesswässer zur Betreiben von Dampferzeugungsanlagen, Dampf- und Warmwasser-Heizungssystemen und Kühlwasser-Kreisläufen enthalten meistens bestimmte Salze von Erdalkalimetallen, die zunächst in gelöster Form vorliegen, beispielsweise als Hydrogencarbonate, aber beim Erwärmen, bei fortschreitender Aufkonzentrierung durch verdampfendes Wasser oder auch nur durch mechanische Einwirkungen in Pumpen, Drosseln usw. schliesslich in unlöslicher Form ausfallen. Dies führt zu Krustenbildung an Rohr- und Gefässwandungen von Wärmeübertragungsanlagen, wodurch der Wärmeübergang beeinträchtigt wird und bei Dampferzeugungsanlagen die Gefahr besteht, dass örtliche Überhitzungen mit nachfolgendem Bersten der Apparate eintreten. Ausserdem führt, insbesondere bei hohen Temperaturen und Drücken, bekanntermassen der im Wasser vorhandene Sauerstoff zu einer Korrosion der Apparate, insbesondere zu Lochfrass.

Die Betreiber solcher Anlagen sind aus wirtschaftlichen Gründen dazu veranlasst, die Prozesswässer entsprechend vorzubehandeln, derart, dass Ausfällungen vermieden werden, die Korrosionsgefahren auf ein Minimum vermindert werden und das so behandelte Wasser möglichst lange im Kreislauf zu behalten.

Eine Möglichkeit einer Vorbehandlung wäre die vollständige Entfernung der Mineralsalze aus dem Wasser. Die vollkommene Entsalzung des Wassers stellt einen wirtschaftlich nicht vertretbaren Aufwand dar. Ausserdem ist seit langem bekannt, dass entmineralisiertes Wasser gegenüber Eisen und Eisenlegierungen und auch gegenüber Buntmetallen korrodierend wirkt; man weiss, dass Mineralsalze im Prozesswasser die Rohre und Gefässe mit einer dünnen, sehr dichten Schicht einer Ausscheidung überziehen, die das darunterliegende Metall vor Korrosion schützt. Schliesslich ist auch nicht auszuschliessen, dass ein zuvor einmal sorgfältig gereinigtes Wasser im Prozess durch Leckagen wieder Salze aufnimmt und dadurch verunreinigt wird.

Aus den genannten Gründen ist heute bekanntermassen ein Zusatz von Additiven zu den hier angesprochenen Prozesswässern unverzichtbar.

Zu den in der Literatur bereits vorgeschlagenen Wasserzusätzen gehören auch Zusammensetzungen zum Inhibieren einer Krustenbildung und sogar der Ausfällung, wobei sehr unterschiedliche Substanzen genannt werden: Fettalkylpolyamine gemäss FR-A-1'435'023; polymere Derivate von hydrolysiertem Maleinsäureanhydrid, Mischungen aus Derivaten von Polymaleinsäureanhydrid und Polyacryl- sowie Polymethacrylsäure und deren Salze gemäss FR-A-2'116'139 und 2'223'308; Acrylsäurepolymere, die in Form der Säure oder von Salzen im Handel erhältlich sind; Polymere und/oder Copolymere der Acryl- und Methacrylsäure und deren Salze mit ausgesuchtem Molekulargewicht gemäss FR-A-2'514'746; oder auch Terpolymere von Acrylsäure, Methacrylsäure und Itaconsäure sowie deren Salze gemäss FR-A-2'544'722.

In der EP-B1-0'184'558 ist ein Verfahren zur Verhinderung von Kesselstein angegeben, bei dem dem zu behandelnden Wasser ein synergistisch wirkendes Gemisch aus Salzen von Polymeren ethylenisch ungesättigter Carbonsäuren und aliphatischen Polyaminen zugegeben wird.

Alle bekannten Wasserzusätze haben die gemeinsamen und grundsätzlichen Nachteile, dass der Zusatz von Additiven zu Prozesswasser kostenaufwendig ist und dass Nebenwirkungen nicht auszuschliessen sind, sei es durch das zugesetzte Mittel selbst oder durch seine eventuell auftretenden Reaktions- oder Abbauprodukte. Ausserdem sind einige der bisher bekannten Zusammensetzungen nur begrenzt lagerstabil. Dies trifft beispielsweise auch auf Zusammensetzungen auf der Basis von Polycarbonsäuren zu und auch auf manche, die in der EP-B1-0'184'558 beschrieben und beansprucht sind. Dabei handelt es sich in letzterem Falle darum, dass die betreffenden Zusammensetzungen im Laufe der Lagerzeit nichts an ihrer Wirksamkeit verlieren, sich aber zuweilen in zwei Schichten nach Art des Aufrahmens trennen; es ist dann nötig, die Zusammensetzung vor Entnahme von Anteilen wieder zu homogenisieren.

Es ist weiterhin bekannt, in Kesselwassersystemen Sauerstoffabfangmittel ("Sauerstoff-Scavenger") zu verwenden. Beispiele solcher Mittel sind Natriumsulfit, Hydrazin, Hydroxylamin und Hydroxylaminderivate wie z.B. Diethylhydroxylamin (DEHA).

Im Dokument DE-C2-3'136'491 ist die Verbesserung der sauerstoffabfangenden Wirkung von Hydroxylaminverbindungen nebst allen Nachteilen der anderen bekannten Sauerstoffscavenger beschrieben. Nach den im Dokument gemachten Angaben soll der Zusatz eines Amins im Gewichtsverhältnis Hydoxylaminverbindung zu Amin von 0,001 bis 1 : 1 eine Steigerung der Wirkung des Hydroxylaminderivats erbringen. Als Amin ist ein flüchtiges Amin zu verwenden.

Aufgabe der Erfindung war es, die genannten Nachteile bekannter Zusatzmittel zu verringern und ein Mittel zur Verhinderung der Ausscheidung von Kesselstein, kesselsteinähnlichen Ablagerungen und anderen Abscheidungen sowie zur Verhinderung der Sauerstoffkorrosion in Prozesswässern zu schaffen, das gegenüber den bekannten Mitteln verbessert ist. Dabei sind bisher nur Mittel bekannt geworden, die entweder Die Verhinderung von Ablagerungen oder die Verhinderung der Sauerstoffkorrosion bewirken sollen.

Diese Aufgabe wird durch das im unabhängigen Patentanspruch definierte Mittel gelöst; besondere Ausführungsformen bilden den Gegenstand abhängiger Ansprüche.

Erfindungsgemäss besteht das erfindungsgemässe Mittel mindestens aus einem oder mehreren Salzen von Polymeren ethylenisch ungesättigter Säuren, mindestens einem aliphatischen Polyamin, einem Hydroxylaminderivat und mindestens einem Alkylbenzolsulfonat, welches nachstehend als hydrotropes Mittel bezeichnet wird.. Damit wird die erfindungsgemässe Aufgabe gelöst. Ganz überraschend wurde nun gefunden, dass die neuen Mittel bedeutend wirksamer sind als die polymeren Säuren allein, die Polyamine allein und auch die Gemische aus diesen beiden Komponenten. Sofern die eingesetzten hydrotropen Mittel als solche bereits eine (in der Regel sehr geringe) kesselsteinverhütende Wirkung besitzen, so wird diese in den erfindungsgemässen Mitteln drastisch gesteigert. Dies wird weiter unten noch näher beschrieben.

Die in den neuen Mitteln anwesende erste Komponente, nämlich die Salze polymerer Säuren, sind zum grössten Teil bekannt und im bereits besprochenen Dokument EP-B1-0'184'558 ausführlich aufgezählt. Zur Offenbarung der beispielsweise verwendbaren Substanzen wird auf die Beschreibung dieser Patentschrift, insbesondere von Seite 4, Zeile 6, bis Seite 5, Zeile 15 verwiesen. Im allgemeinen handelt es sich um leicht wasserlösliche Salze, nämlich Alkalimetallsalze, von Homo-, Co- und Terpolymeren ethylenisch ungesättigter Säuren und beliebige Gemische solcher Salze. Ausserdem sind die von den obigen polymeren Säuren abgeleiteten sogenannten Threshold-Mittel geeignet; unter diesem Begriff werden, wie dem Fachmann bekannt ist, solche Substanzen verstanden, die schon in unterstöchiometrischen Mengen eine Ausfällung schwerlöslicher Mineralsalze im Prozesswasser verhindern. Man nimmt an, dass diese Wirkung durch eine Verkapselung der sich bildenden Impfkristalle zustandekommt.

Nach weiterer Erfindung wurde nun festgestellt, dass die neuen erfindungsgemässen Mittel eine noch bessere Löslichkeit und Stabilität besitzen, wenn man nicht Alkalisalze der genannten polymeren Säuren, sondern Salze der Säuren mit Alkylaminen verwendet, insbesondere mit Aminen, die nicht oder nur schwer biologisch abbaubar sind. Solche Salze sind normalerweise nicht handelsüblich; man erhält sie durch Neutralisation der beider Polymerisation gebildeten Säuren mit dem entsprechenden, gewünschten Amin.

Als zweite Komponente der erfindungsgemässen Mittel, die hydrotropen Substanzen, eignen sich insbesondere Cumolsulfonate.

Verwendbare Verbindungen sind weiterhin z.B. Toluolsulfonate, o-, m- und p-Xylolsulfonat und die entsprechenden tert.-Butylbenzolsulfonate.

Die dritte Komponente der neuen, erfindungsgemässen Mittel sind höher aliphatische Polyamine, die auch als Fettpolyamine bezeichnet werden. Beispiele verwendbarer Verbindungen finden sich auf Seite 3, Zeile 53, bis Seite 4, Zeile 5 der oben genannten europäischen Patentschrift. Es wird auf die Offenbarung dieser europäischen Patentschrift verwiesen, die hier nicht wiederholt werden soll.

Das erfindungsgemässe Mittel besteht, abgesehen vom Verdünnungswasser, im allgemeinen aus 30 bis 80 Gew.-Teilen polymerer Carbonsäure, als 50 %ige wässrige Einstellung gerechnet, 20 bis 70 Gew.-Teilen Fettpolyamin, 5 bis 60 Gew.-Teilen eines hydrotropen Mittels und 5 bis 30 Gew.-Teilen Hydroxylaminderivat, insbesondere DEHA (Diethylhydroxylamin), als 85 %ige wässrige Mischung berechnet. Bevorzugt ist es, einem geeigneten Mittel aus den drei ersten Komponenten 5 bis 15 Gew.-%, insbesondere etwa 10 Gew.-% DEHA 85 %ig zuzusetzen. Das Mittel ist gegen die Bildung von Kesselstein aktiv und verhindert zuverlässig eine Sauerstoffkorrosion. Die Substanzkombination ergibt beständige und mit kaltem Wasser durch blosses Mischen verdünnbare Kombinationen. In der Folge werden bei Mengenangaben die polymere Säure und ihre Salze (erste Komponente) als etwa 50 %ige wässrige Einstellung gerechnet. Im Gegensatz zu den Aminen, die gemäss DE-C2-3'136'491 verwendet werden, sind die vorliegenden Polyamine nicht flüchtig.

Ein bevorzugtes Mittel besteht aus 5 bis 50 Gewichtsteilen der ersten Komponente, vorzugsweise 10 bis 25 Gewichtsteilen; 1 bis 20 Gewichtsteilen des hydrotropen Mittels, bevorzugt 1 bis 6 Gewichtsteilen, 2 bis 15, insbesondere 2 bis 7 Gewichtsteilen des Polyamins und 3 bis 15 Gew.-%, insbesondere 8 Gew.-%, bezogen auf die Summe der obigen drei Bestandteile, eines Hydroxylaminderivats, insbesondere DEHA. Ein solches Mittel liegt im allgemeinen als wässrige Mischung vor; sie erscheint völlig klar, entmischt sich beim Lagern nicht und besitzt eine überlegene Wirksamkeit. Die Erfindung gestattet es sogar, Substanzen miteinander zu kombinieren, die als unverträglich gelten; es ist möglich, Phosphonate und Fettpolyamine mit Hilfe ausgewählter hydrotroper Substanzen zu einer klaren Lösung zu vereinigen, wogegen die beiden Stoffe für sich allein sofort zu einem zähen und schwer aus dem Gefäss zu entfernenden Addukt zusammentreten.

Zur Herstellung des Mittels werden im allgemeinen die einzelnen Bestandteile einfach in Form wässriger Lösungen, Suspensionen oder Emulsionen miteinander vermischt. Man erhält eine klare Lösung, die mit Wasser, auch mit kaltem Wasser, beliebig verdünnt werden kann. Dieser Vorteil der problemlosen Verdünnbarkeit wirkt sich auch beim praktischen Einsatz als Kesselspeisewasser-Additiv besonders günstig aus. Probleme, wie sie aus der Anwendung von Fettaminen und Fettpolyaminen in der Praxis gelegentlich in Form von Abscheidungen mangels guter Verteilbarkeit im Kesselspeisewasser auftreten, lassen sich so wirksam beseitigen.

Bei den im folgenden beschriebenen Versuchsverfahren haben Mischungen aus 20 bis 50 Teilen kesselsteinverhindernder Polymere auf der Basis von Polycarbonsäuren und 10 bis 40 Teilen Feltpolyaminen mit 20 bis 40 Teilen hydrotroper Verbindungen , zusätzlich 10 Gew.-% DEHA, bezüglich der Verhinderung von Kesselsteinbildung und der Sauerstoffkorrosion Ergebnisse erzielt, die diejenigen reiner Kombinationen aus Polycarbonsäuren mit Fettaminen gemäss EP-B1-0'184'558 um ein Mehrfaches übertreffen.

Als Hydroxylaminderivate, die im erfindungsgemässen Mittel verwendet werden können, ist vor allem Diethylhydroxylamin (DEHA) zu nennen, daneben kommen aber auch andere, am Stickstoff durch Alkyl, Aryl, Aralkyl und/oder Alkaryl substituier te Derivate in Frage.

Zur Überprüfung der Wirkzamkeit der gewählten Kombinationen wurde einerseits die deutsche VdTÜV-Richtlinie für die Untersuchung von Kesselstein-Gegenmitteln herangezogen und andererseits ein Verfahren, wie es im Dokument DE-A1-3'933'798 beschrieben ist. Nach diesem Verfahren werden Wasserproben, denen ein Additiv zugesetzt wurde, mittels einer Präzisions-Dosierpumpe unter konstanter Förderleistung durch eine Kapillare gedrückt, die in ein am Rückfluss siedendes Wasserbad eintaucht und unter diesen Bedingungen zur Abscheidung von Ausfällungen neigt, sofern entsprechende Erdalkalisalze vorhanden sind.

Dieses Vorhandensein wird dadurch gewährleistet, dass ein Mineralwasser mit einer Härte von 80° d, das durch Stehenlassen an der Luft ins Kalk-Kohlensäure-Gleichgewicht gebracht worden ist, als Basiswasser gewählt wird, dem die Additive zugesetzt werden. Das Wasser, und zwar sowohl mit Additiv versetztes als auch Vergleichswasser ohne Additiv, wird so lange durch die sich allmählich mit abgeschiedenen Inkrustationen zusetzende Kapillare gedrückt, bis auf die fördernde Pumpe ein Gegendruck von 3 MPa einwirkt. Durch eine Automatik wird die Pumpe bei Erreichen dieses Druckes automatisch abgeschaltet. Der Druckverlauf wird mit einem Schreiber registriert und zusätzlich zu der während der Prüfperiode hindurchgepumpten Wassermenge zur Kontrolle verwendet.

Diese beiden Untersuchungsmethoden erlauben eine wesentliche Verkürzung der Zeit, die zur Beobachtung bei der praktischen Untersuchung von Mitteln gegen Kesselstein gebraucht wird. Mit der Methodik nach der VdTÜV-Richtlinie ist eine Prüfung innerhalb von 60 Stunden durchzuführen, und mit der Kapillartechnik ist ein Versuchslauf sogar schon in wenigen Stunden beendet. Der Blindwert ist bereits innerhalb einer halben Stunde erreicht. Beide Methoden führen trotz sehr unterschiedlicher Versuchszeiten in der Tendenz zur gleichen Aussage. Die erste Prüfmethode nach der VdTÜV-Richtlinie hat den Vorteil, bereits für solche Untersuchungen anerkannt zu sein, während die zweite Methode einen grossen Zeitgewinn bringt.

Aufgrund der stark verbesserten Wirksamkeit der neuen erfindungsgemässen Mittel hat man die Wahl, sie entweder in der gleichen Konzentration einzusetzen wie die bekannten Mittel und dabei eine mehr als verdoppelte Standzeit im Betrieb zu erreichen, oder sie nur mit der Hälfte oder weniger der bekannten Mittel anzuwenden. Beide Massnahmen können natürlich kombiniert werden. Zur Zeit wird die Zugabe etwa der halben Menge bevorzugt. Die anzuwendenden Konzentrationen können fast beliebig gewählt werden und richten sich nach den Eigenschaften des jeweiligen Prozesswassers und nach wirtschaftlichen Gesichtspunkten. Speisewasseradditive werden in Anteilen von 5 bis 50 ppm zugesetzt, bevorzugt etwa 5 bis 10 ppm. Diese Anteile beziehen sich jeweils auf das Gewicht der Mittel, in denen die vorhandenen Wirkstoffe etwa 25 Gew.-%, Rest Wasser, ausmachen.

Die Erfindung soll nun an einigen Beispielen weiter erläutert werden. Die Beispiele schränken die Erfindung nicht ein. Teile und Prozentangaben beziehen sich auf das Gewicht, falls aus dem Zusammenhang nichts anderes hervorgeht.

### Beispiel 1

Man löst 20 Teile Cumolsulfonat in 20 Teilen entmineralisiertem Wasser. Dazu gibt man 150 Teile Polycarbonsäuren als 50 %ige Handelsware, fügt 40 Teile Fettpolyamin sowie 100 Teile 85 %iges DEHA (Diethylhydroxylamin) hinzu und füllt auf 1000 Teile mit entmineralisiertem Wasser auf.

Eine Zugabe von 5 ppm dieses Mittels, auf das konfektionierte Produkt berechnet, zu Kesselspeisewasser ergibt die gleiche Wirkung wie eine Zugabe von 25 ppm der oben aufgeführten zweiten, bekannten Mischung und verhindert zudem die Sauerstoffkorrosion.

Die erfindungsgemässe Wirkung dieser Mischung zeigt sich darin, dass im Kapillartest der oben beschriebene Endpunkt von 3 MPa bei einer Zugabe von 50 ppm Polyacrylat zum Wasser nach 40 Minuten erreicht ist. Eine Zugabe von 50 ppm des erfindungsgemässen Additivs, berechnet auf Wirkstoff, ergab eine Standzeit von 80 Minuten. Wasser mit einem Gehalt von 50 ppm Cumolsulfonat allein zeigte eine nur um knappe 10 % erhöhte Standzeit im Vergleich zu Wasser ohne Additiv, welche zu 30 Minuten gemessen wurde.

Die Mischung aus Polyacrylat und Cumolsulfonat erweist sich in einem Zellvermehrungstest nach Bringmann und Kühn als inert und hat keinen biologischen Sauerstoffbedarf, weil die einzelnen Komponenten nicht als Nahrungsquelle für Mikroorganismen dienen können.

### Beispiel 2

Zum Speisewasseradditiv gemäss Beispiel 1 wird noch eine Lösung von 7 Teilen technischer Tris-aminomethylenphosphonsäure, ein Threshold-Mittel, in 13 Teilen Wasser gegeben.

Dieses Mittel verbessert die Eigenschaften des Mittels nach Beispiel 1 weiter. Die Wirkung der ausgewählten Kombination hydrotroper Mittel zeigt sich überraschend in Form einer absolut klaren Lösung, wogegen Fettpolyamine mit Phosphonsäuren jeder Art und unabhängig von einem Zusatz anderer Polyamine und polymerer Carbonsäuren stets zu einem klebrigen Addukt führt, das in Wasser nicht mehr verteilbar ist.

### Beispiel 3

150 Teile einer handelsüblichen Polycarbonsäure mit einem Molekulargewicht von etwa 2000 werden mit je 30 Teilen Diethanolamin und Cyclohexylamin vermischt. Dann werden 50 Teile Fettpolyamin, z.B. nach FR-A-1'435'023, 100 Teile DEHA 85 %ig sowie 30 Teile Cumolsulfonat als 50 %ige wässrige Lösung zugesetzt und das Ganze mit entmineralisiertem Wasser auf 1000 Teile aufgefüllt.

Die erfindungsgemässen Mittel können nach Wissen und Können des Fachmanns im Rahmen der Patentansprüche weiter abgewandelt werden. Insbesondere sind weitere, an sich übliche Zusätze wie Dosierhilfsmittel, Konservierungsmittel, Farbstoffe, Aromastoffe, Viskositätsregler, pH-Regler usw. möglich. Solche Zusätze werden von der Erfindung mitumfasst.

## Patentansprüche

1. Mittel zur Verhinderung der Ausscheidung von Kesselstein, kesselsteinähnlichen Ablagerungen und anderen Abscheidungen in Prozesswässern sowie zur Verhinderung der Sauerstoffkorrosion, enthaltend mindestens ein Salz von Polymeren ethylenisch ungesättigter Carbonsäuren, ausgewählt aus Polymaleaten, Polyacrylaten, Polymethacrylaten, Maleat-(Meth)Acrylat-Copolymeren, Acrylat-Methacrylat-Itaconat-Terpolymeren und Mischungen derselben sowie ein Fettpolyamin, dadurch gekennzeichnet, dass es weiterhin ein Hydroxylaminderivat als Sauerstoffabfang-Substanz und mindestens ein Alkylbenzolsulfonat als hydrotropes Mittel zur Solubilisierung seiner Bestandteile enthält.

2. Mittel nach Anspruch 1, dadurch gekennzeichnet, dass es als wässrige Lösung vorliegt.

3. Mittel nach Anspruch 1, dadurch gekennzeichnet, dass das Fettpolyamin der Formel
R―[―NH-(CH₂)₃-]ₙ―NH₂
entspricht, worin R einen aliphatischen Rest mit 12 bis 18 C-Atomen und n eine ganze Zahl von 1 bis 6 bedeuten.

4. Mittel nach einem der vorstehenden Ansprüche, dadurch gekennzeichnet, dass es als weiteren Bestandteil mindestens ein Phosphonsäurederivat enthält.

5. Mittel nach Anspruch 1, dadurch gekennzeichnet, dass das hydrotrope Mittel Cumolsulfonat ist.

6. Mittel nach einem der vorstehenden Ansprüche, dadurch gekennzeichnet, dass die polymere Carbonsäure als Salz eines Alkylamins, insbesondere eines biologisch schwer oder gar nicht abbaubaren Alkylamins, vorliegt.

7. Mittel nach Anspruch 1, dadurch gekennzeichnet, dass es die polymere Säure, gerechnet als etwa 50 %ige wässrige Einstellung, und die hydrotrope Verbindung im Gewichtsverhältnis 3 bis 7 zu 7 bis 3 enthält.

8. Mittel nach einem der vorstehenden Ansprüche, dadurch gekennzeichnet, dass es als Hydroxylaminderivat Diethylhydroxylamin enthält.

9. Mittel nach Anspruch 2 oder 3, dadurch gekennzeichnet, dass seine Wirkbestandteile im Verhältnis von 30 bis 80 Teile polymere Carbonsäure, etwa 50 %ig, 20 bis 70 Teile Fettpolyamin und 5 bis 60 Teile hydrotrope Verbindung stehen, und dass das Mittel, aufgefüllt mit Wasser auf 1 l und enthaltend 180 bis 350 g einer Mischung der Wirkstoffe im oben angegebenen Verhältnis, zusätzlich 3 bis 15 Gew.-% an Diethylhydroxylamin enthält, wobei sich die Teile auf das Gewicht beziehen.

## Claims

1. Composition for the prevention of scale precipitation, scale-like deposits and other precipitations from industrial waters, as well as for preventing oxygen corrosion, containing at least one salt of polymers of ethylenically unsaturated carboxylic acids, selected from polymaleates, polyacrylates, polymethacrylates, maleate (meth)acrylate copolymers, acrylate methacrylate itaconate terpolymers, and from mixtures thereof, and furthermore at least one fatty polyamine, characterised by the fact that it further contains a hydroxylamine derivative as an oxygen scavenger and at least one alkylbenzene sulfonate as a hydrotropic agent for solubilising its components.

2. The composition of claim 1, characterised by the fact that it is in the form of an aqueous solution.

3. The composition of claim 1, characterised by the fact that the fatty polyamine has the formula
R―[―NH―(CH₂)₃―]ₙ―NH₂
wherein R is an aliphatic radical having from 12 to 18 carbon atoms, and n is an integer from 1 to 6.

4. The composition of any one of the preceding claims, characterised by the fact that it contains at least one phosphonic acid derivative as a further component.

5. The composition of claim 1, characterised by the fact that the hydrotropic agent is cumenesulfonate.

6. The composition of any one of the preceding claims, characterised by the fact that the polymeric carboxylic acid is present in the form of an alkylamine salt, preferably as a salt of an alkylamine which is biologically difficult to be decomposed or not at all decomposable.

7. The composition of claim 1, characterised by the fact that it contains the polymeric acid, calculated as an aqueous composition of about 50 %, and the hydrotropic compound in a weight ration of between 3 to 7 and 7 to 3.

8. The composition of any one of the preceding claims, characterised by the fact that it contains diethyl hydroxylamine as a hydroxylamine derivative.

9. The composition of claim 2 or 3, characterised by the fact that it contains its active components in a ratio of 30 to 80 parts of polymeric carboxylic acid whose concentration is about 50 %, 20 to 70 parts of fatty polyamine, and 5 to 60 parts of hydrotropic compound, and that the composition further contains, when completed with water to 1 litre and containing from 180 to 350 g of a mixture of active ingredients in the ratios defined above, further contains from 3 to 15 % by weight of diethyl hydroxylamine, all parts indicated above referring to the weight.

## Revendications

1. Composition pour empêcher la formation de tartre, de dépôts similaires et d'autres précipitations dans les eaux industrielles ainsi que pour empêcher la corrosion provoquée par l'oxygène, contenant au moins un sel de polymères d'acides carboxyliques éthyléniquement insaturés, choisis parmi les polymaléates, les polyacrylates, les polyméthacrylates, les copolymères maléate-(méth)acrylate, les terpolymères acrylate-méthacrylate-itaconate, et de leurs mélanges et contenant également une polyamine grasse, caractérisée en ce qu'elle contient en plus un dérivé de l'hydroxylamine à titre de substance captant l'oxygène et au moins un alkylbenzène sulfonate à titre d'agent hydrotrope pour solubiliser ses ingrédients.

2. Composition selon la revendication 1, caractérisée en ce qu'elle est sous forme de solution aqueuse.

3. Composition selon la revendication 1, caractérisée en ce que la polyamine grasse répond à la formule
R―[―NH―(CH₂)₃―]ₙ―NH₂
dans laquelle R signifie un radical aliphatique ayant de 12 à 18 atomes de carbone, et n est un nombre entier de 1 à 6.

4. Composition selon l'une quelconque des revendications précédentes, caractérisée en ce qu'elle contient au moins un dérivé d'acide phosphonique à titre d'ingrédient additionnel.

5. Composition selon la revendication 1, caractérisée en ce que l'agent hydrotrope est un sulfonate de cumène.

6. Composition selon l'une quelconque des revendications précédentes, caractérisée en ce que l'acide carboxylique polymère est présent sous forme de sel d'une alkylamine, en particulier d'une amine difficile ou pas du tout biodégradable.

7. Composition selon la revendication 1, caractérisée en ce que l'acide polymère, calculé comme une formulation aqueuse à 50 % environ, et le composé hydrotrope sont présents dans un rapport pondéral compris entre 3 à 7 et 7 à 3.

8. Composition selon l'une quelconque des revendications précédentes, caractérisée en ce qu'elle contient la diéthyl hydroxylamine à titre de dérivé de la hydroxylamine.

9. Composition selon la revendication 2 ou 3, caractérisée en ce que ses ingrédients actifs comprennent 30 à 80 parties d'acide carboxylique polymère, à 50 % environ, pour 20 à 70 parties de polyamine grasse et 5 à 60 parties de composé hydrotrope, et que la composition, diluée avec de l'eau à 1 litre et contenant de 180 à 350 g d'un mélange des ingrédients actifs dans les rapports définis ci-dessus, contient additionnellement de 3 à 15 % en poids de diéthyl hydroxylamine, les dites parties étant en poids.
